# DEMANDE DE BREVET EUROPEEN

(11) **EP 1 047 254 A1**
(43) Date de publication de la demande: **25.10.2000**
(21) Numéro de dépôt: 00401067.4
(22) Date de dépôt: 17.04.2000
(51) Int. Cl.: H04M 3/00, H04Q 11/04, H04M 11/04, H04M 1/253

(54) **Système de raccordement entre un terminal analogique et un commutateur téléphonique analogique**

(30) Priorité: 19.04.1999 FR 9905070
(71) Demandeur: SAGEM SA, 75116 Paris (FR)
(72) Inventeur: Aubert, Gilles, 91340 Ollainville (FR)
(74) Mandataire: Lapoux, Roland

(57) **Abrégé**

Le système raccorde un terminal téléphonique analogique (TA) et un commutateur téléphonique analogique (CM) à travers une ligne téléphonique d'abonné (LN) supportant deux canaux de données B et un canal de signalisation D, munie à ses extrémités de premier et deuxième équipements. Dans le sens commutateur vers terminal, le deuxième équipement (EC) convertit des signaux de parole et de tonalité transmis par le commutateur sous forme numérique dans un canal dédié B, et génère des messages de signalisation téléphonique dans le canal D par exemple en réponse à des impulsions de sonnerie cadencée, impulsions de taxe et inversions de polarité. Le premier équipement (EA) convertit analogiquement les signaux numériques du canal dédié et émet les signalisations téléphoniques vers le terminal. Dans l'autre sens, des messages de signalisation sont générés et convertis dans les deux équipements. Le deuxième canal B peut convoyer des signaux pour un autre terminal.

## Description

La présente invention concerne un système de raccordement entre un terminal téléphonique analogique et un commutateur téléphonique, comprenant un premier équipement pour convertir des premiers signaux analogiques transmis par le terminal dans une première ligne analogique bidirectionnelle en des premiers signaux numériques transmis dans une liaison bidirectionnelle et pour convertir des deuxièmes signaux numériques de la liaison en des deuxièmes signaux analogiques transmis dans la première ligne analogique vers le terminal.

Dans un tel système de raccordement connu, la liaison est purement numérique et le commutateur téléphonique est un commutateur numérique RNIS qui directement reçoit les premiers signaux numériques et transmet les deuxièmes signaux numériques. Par exemple, la liaison numérique selon chaque sens de transmission offre un support multiplex pour deux canaux numériques Bl et B2 à 64 kbit/s transmettant de la parole ou des données provenant d'un télécopieur ou d'un modem et pour au moins un canal numérique de signalisation D notamment pour échanger de la signalisation téléphonique entre le terminal et le commutateur. Le principal avantage d'une telle liaison numérique est d'offrir simultanément à une installation téléphonique d'abonné par exemple une communication de parole et une communication de données.

Un tel avantage n'est pas offert aux abonnés possédant un terminal téléphonique analogique classique relié par une ligne analogique d'abonné à un commutateur téléphonique analogique puisqu'une seule communication téléphonique peut être transmise dans la ligne analogique d'abonné.

Afin de fournir les avantages d'une liaison RNIS à une installation d'abonné téléphonique analogique reliée à un commutateur téléphonique analogique sans modification de l'installation et du commutateur et en utilisant la ligne téléphonique d'abonné existante à deux fils, le brevet US 5111497 et la demande de brevet WO 9101600 divulguent des systèmes de raccordement tels que celui défini dans l'entrée en matière, avec commutateur analogique, comprenant un deuxième équipement pour convertir les premiers signaux numériques en des troisièmes signaux analogiques transmis dans une deuxième ligne analogique bidirectionnelle vers le commutateur et pour convertir des quatrièmes signaux analogiques transmis par le commutateur dans la deuxième ligne analogique en les deuxièmes signaux numériques dans la liaison.

La liaison numérique entre les premier et deuxième équipements est complètement transparente aux signaux analogiques de parole ainsi qu'à d'autres signaux analogiques notamment relatifs à des tonalités et à des chiffres de numéro d'appel, et convoie sous forme de messages de signalisation numériques des signaux analogiques spécifiques de signalisation téléphonique qui ne peuvent pas être convertis simplement et classiquement en des signaux numériques. Ces signaux analogiques de signalisation sont notamment des signaux de sonnerie cadencée, des inversions de polarité dans les lignes analogiques, des fermetures de boucle et ouvertures de boucle dans les lignes analogiques notamment lors de la prise et de la libération de la ligne, c'est-à-dire lors d'une opération de décrochage et une opération de raccrochage, et des signaux de numérotation décimale.

Toutefois, les systèmes de raccordement connus ne sont pas adaptés à tous les signaux de signalisation téléphonique produits par des commutateurs analogiques de différents types.

L'invention a pour objectif de détecter tous les signaux de signalisation téléphonique différents entre commutateurs de types ou de fabricants différents, afin que le système de raccordement soit universel et particulièrement afin qu'une sonnerie cadencée soit produite dans le terminal lors d'un appel d'arrivée. Il n'est pas nécessaire de programmer particulièrement des équipements en fonction du type de commutateur, comme dans le premier équipement connu pour commutateur RNIS qui doit connaître le type d'impulsion de sonnerie cadencée et le type d'impulsion de taxe que souhaite faire transmettre le commutateur au terminal.

A cette fin, un système de raccordement tel que défini dans le préambule de la revendication 1, est caractérisé en ce que le deuxième équipement du système de raccordement de l'invention comprend un moyen pour détecter des impulsions modulant un courant alternatif de fréquence prédéterminée produites dans la deuxième ligne analogique par le commutateur, et un moyen pour générer des premier et deuxième messages numériques de signalisation dans la liaison numérique vers le premier équipement respectivement en réponse au début et à la fin de chaque impulsion détectée, et le premier équipement comprend un moyen pour extraire et analyser les premier et deuxième messages de signalisation dans la liaison et un moyen pour commencer à émettre une impulsion modulant un courant alternatif dans la première ligne analogique vers le terminal en réponse au premier message de signalisation et pour terminer l'impulsion en réponse au deuxième message de signalisation.

Les impulsions modulant un courant alternatif de fréquence prédéterminée produites par les commutateurs sont des impulsions d'un signal de sonnerie cadencée. Le premier message de signalisation contient dans un champ d'information la plus grande durée des impulsions de signaux de sonnerie cadencée qu'est susceptible de produire le commutateur afin que la réception d'un deuxième message numérique de signalisation dans le premier équipement limite la longueur de l'impulsion transmise au terminal qui a débutée en réponse au premier message de signalisation.

Ces caractéristiques confèrent un caractère universel aux équipements par rapport aux divers signaux de sonnerie cadencée des commutateurs téléphoniques connus.

Le premier message de signalisation est un signal d'établissement d'appel d'arrivée en réponse au début d'une première impulsion transmise par le commutateur à la suite d'un appel d'arrivée du terminal et détectée dans le deuxième équipement.

Afin que le système de raccordement soit utilisé avec un commutateur téléphonique produisant une inversion de polarité pour un appel d'arrivée, le deuxième équipement comprend un moyen pour détecter une inversion de polarité dans la deuxième ligne analogique à la suite d'un appel d'arrivée du terminal dans le commutateur, et un moyen pour générer un message numérique de signalisation d'établissement puis un message numérique de signalisation de polarité inversée dans la liaison vers le premier équipement ; et le premier équipement comprend un moyen pour extraire et analyser le message de signalisation d'établissement et le message de signalisation de polarité inversée et un moyen pour inverser la polarité dans la première ligne analogique en réponse au message de polarité inversée. Un signal de tonalité transmis dans la deuxième ligne analogique par le commutateur succédant à l'inversion de polarité peut être converti en un deuxième signal numérique dans le deuxième équipement puis dans le premier équipement en un signal de tonalité transmis dans la première ligne analogique vers le terminal.

Pour un commutateur à tonalité d'appel d'arrivée, le deuxième équipement peut comprendre un moyen pour détecter un signal de tonalité d'appel transmis dans la deuxième ligne analogique par le commutateur, et un moyen pour générer un message numérique d'établissement dans la liaison numérique vers le premier équipement. Le signal de tonalité d'appel est converti en un deuxième signal numérique dans le deuxième équipement puis en un deuxième signal analogique dans le premier équipement.

Pour un appel de départ depuis le terminal, le premier équipement comprend un moyen pour détecter une fermeture de boucle dans la première ligne analogique à la suite d'un décrochage dans le terminal, et un moyen pour générer un message numérique de signalisation d'établissement dans la liaison en réponse à la fermeture de boucle détectée, et le deuxième équipement comprend un moyen pour détecter le message de signalisation d'établissement dans la liaison et un moyen pour générer une fermeture de boucle dans la deuxième ligne analogique en réponse au signal d'établissement détecté. Un signal de tonalité d'invitation à numéroter produit par le commutateur en réponse à la fermeture de boucle peut être converti en un deuxième signal numérique dans le deuxième équipement, puis dans le premier équipement en un signal de tonalité d'invitation à numéroter transmis dans la première ligne analogique vers le terminal.

Lorsque la numérotation dans le terminal est décimale, le premier équipement peut comprendre un moyen pour détecter des couples d'ouverture de boucle et fermeture de boucle calibrées dans la première ligne analogique à la suite d'un chiffre de numéro d'appel composé dans le terminal et un moyen pour générer un message numérique de signalisation de chiffre contenant un nombre desdits couples détectés dans la liaison, et le deuxième équipement peut comprendre un moyen pour détecter le message de signalisation de chiffre dans la liaison, et un moyen pour générer le nombre de couples d'ouverture de boucle et de fermeture de boucle calibrées dans la deuxième ligne analogique en réponse à la lecture dans le message de signalisation de chiffre.

Les quatrièmes signaux analogiques qui sont convertis en des deuxièmes signaux numériques dans le deuxième équipement puis en des premiers signaux analogiques dans le premier équipement, sont des signaux de parole transmis par le commutateur pendant une phase de conversation d'une communication et notamment des signaux d'identification de demandeur, des signaux de tonalité d'appel, des signaux de tonalité d'invitation à numéroter, des signaux de suppression de tonalité d'invitation à numéroter et des signaux de tonalité de retour d'appel. Les premiers signaux analogiques convertis en des premiers signaux numériques dans le premier équipement, puis convertis en des troisièmes signaux analogiques dans le deuxième équipement sont des signaux de parole transmis par le terminal pendant une phase de conversation d'une communication et notamment des signaux de numérotation à multifréquence de chiffres d'un numéro d'appel composé dans le terminal.

Si le terminal comprend un compteur d'unité de taxe, le deuxième équipement peut comprendre un moyen pour détecter une impulsion de taxe produite dans la deuxième ligne analogique par le commutateur et un moyen pour générer un message numérique de signalisation de taxe dans la liaison numérique vers le premier équipement en réponse à l'impulsion de taxe détectée. Le premier équipement peut comprendre un moyen pour extraire et analyser le message de signalisation de taxe et un moyen pour émettre une impulsion de taxe dans la première ligne analogique vers le terminal en réponse au message de signalisation de taxe.

Pour libérer la liaison entre le commutateur et le terminal dans lequel un raccrochage est effectué, le premier équipement peut comprendre un moyen pour détecter une ouverture de boucle dans la première ligne analogique à la suite d'un raccrochage dans le terminal et un moyen pour générer un message numérique de signalisation de raccrochage dans la liaison en réponse à l'ouverture de boucle, et le deuxième équipement peut comprendre un moyen pour détecter le message de signalisation de raccrochage dans la liaison et un moyen pour générer une ouverture de boucle dans la deuxième ligne analogique en réponse au message de signalisation de raccrochage détecté, et un moyen pour générer un message numérique de signalisation de déconnexion comportant une information de polarité normale dans la liaison vers le premier équipement en réponse au message de signalisation de raccrochage détecté.

La liaison numérique est par exemple une ligne de transmission à deux fils RNIS qui convoie pour chaque sens de transmission au moins deux canaux numériques de données dont l'un supporte les premiers ou deuxièmes signaux numériques, qui sont multiplexés avec un canal de signalisation supportant les divers messages de signalisation définis ci-dessus.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 montre un système de raccordement entre un terminal téléphonique analogique et un commutateur téléphonique analogique selon l'invention ;
- la figure 2 est un bloc-diagramme détaillé du deuxième équipement, dit équipement de central, du côté du commutateur ;
- la figure 3 est un bloc-diagramme détaillé du premier équipement, dit équipement d'abonné, du côté du terminal ;
- la figure 4 est un diagramme de signaux analogiques et de messages numériques pour un appel d'arrivée d'un demandeur éloigné du terminal ;
- la figure 5 est un diagramme de signaux analogiques et de messages numériques pour un appel de départ provenant du terminal, avec traduction d'un numéro d'appel en impulsions de numérotation décimale;
- la figure 6 est un diagramme de signaux analogiques et de messages numériques lors de la transmission d'impulsions de taxe du commutateur vers le terminal ; et
- la figure 7 est un diagramme de signaux analogiques et de messages numériques lors de la libération de la liaison entre le commutateur et le terminal par raccrochage dans le terminal.

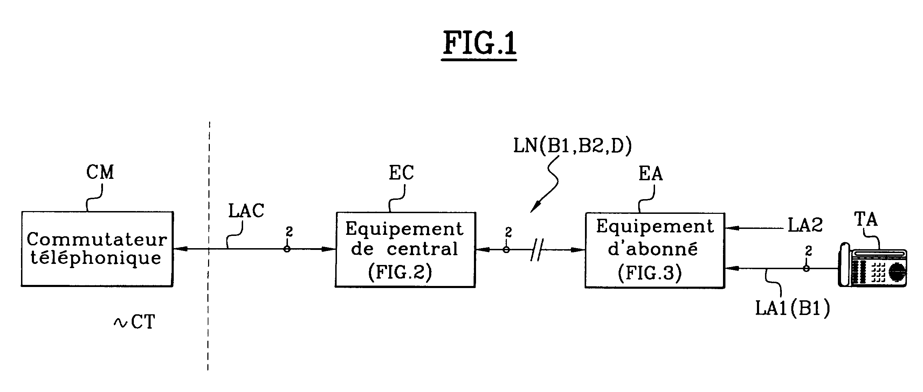

En référence à la figure 1, un système de raccordement selon l'invention raccorde un terminal d'abonné téléphonique TA, tel qu'un poste d'abonné téléphonique analogique TA, à un commutateur téléphonique analogique CM dans un central téléphonique CT. Entre le terminal TA et le commutateur CM est prévue une longue liaison numérique bidirectionnelle sous la forme d'une ligne téléphonique d'abonné déjà existante à une paire de fils, dite ligne "numérique" LN. La ligne LN présente, selon l'invention, une extrémité du côté abonné reliée à un premier équipement, dit équipement d'abonné EA, et une deuxième extrémité du côté du central téléphonique reliée à un deuxième équipement, dit équipement de central EC. L'équipement d'abonné EA est relié au terminal d'abonné TA à travers une ligne analogique relativement courte à deux fils LA1. De même, l'équipement de central EC est relié à un port du commutateur CM à travers une ligne analogique relativement courte à deux fils LAC.

Selon la réalisation préférée décrite dans la suite de la description, la liaison numérique LN constitue une ligne numérique bidirectionnelle qui transporte un multiplex de canaux du type 2B+D aussi bien dans le sens de transmission d'une voie d'émission à deux fils VE depuis l'équipement d'abonné EA vers l'équipement de central EC que dans le sens de transmission d'une voie de réception à deux fils VR depuis l'équipement de central EC vers l'équipement d'abonné EA. Les deux canaux B ont chacun un débit de 64 kbit/s et sont exploités en mode circuit. Le premier canal B1 est dédié à la transmission de signaux produits par le terminal TA et destinés à celui-ci, et l'autre B2 n'étant pas utilisé ou étant utilisé pour un autre terminal téléphonique analogique. Le canal D a un débit de 16 kbit/s et supporte de la signalisation entre les deux équipements EC et EA, et particulièrement de la signalisation téléphonique produite par le commutateur CM et par le terminal TA, devant être convertie numériquement pour être transmise dans la ligne numérique LN. En pratique, le multiplex de canaux suivant chaque sens de transmission dans la ligne numérique LN offre un débit total de 160 kbit/s, les 16 kbit/s restants étant occupés notamment par un canal de maintenance et de supervision CMS à 4 kbit/s.

Dans la voie VR de l'équipement de central et la voie VE de l'équipement d'abonné, chaque paire de bits 2B de chaque canal est convertie en un symbole quaternaire 1Q selon un codage 2B1Q dont la table de codage est la suivante :

| 2B | 1Q |
|---|---|
| 00 | - 3 |
| 01 | - 1 |
| 11 | + 1 |
| 10 | + 3 |

Grâce à des motifs de verrouillage additionnels, la synchronisation des octets dans chacun des canaux est assurée entre un moyen d'émission dans l'un des équipements EA et EC et un moyen de réception dans l'autre équipement. La vitesse de modulation dans la ligne numérique LN est ainsi égale à 80 kbauds, en correspondance avec le débit de 160 kbit/s.

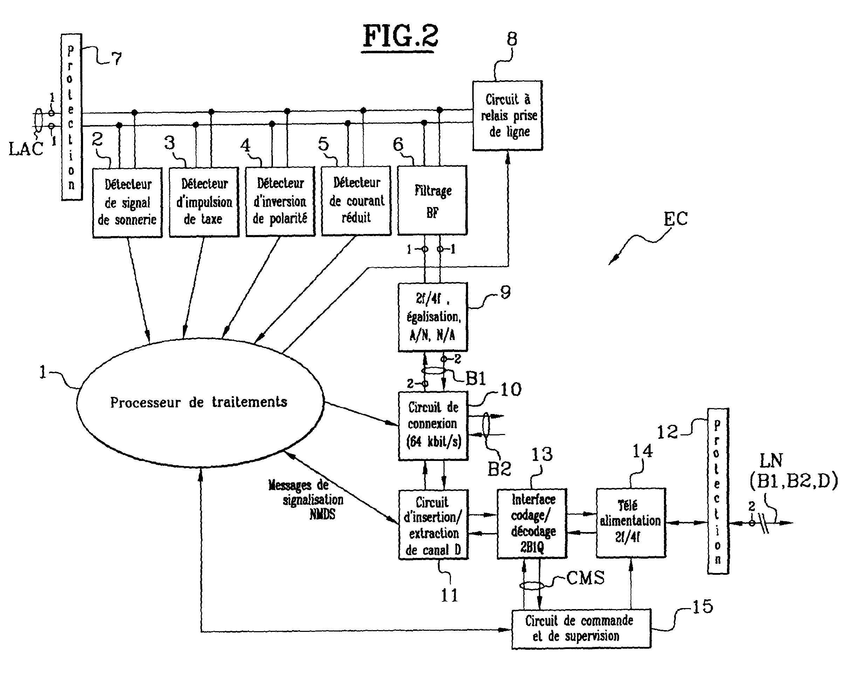

Comme montré à la figure 2, l'équipement de central EC est organisé autour d'un processeur de traitements 1 au niveau de la couche 3 du modèle ISO. La signalisation téléphonique transmise par le commutateur CM à travers la ligne analogique LAC est analysée par le processeur 1 qui la retransmet sous forme de messages de signalisation numériques dans le canal de signalisation D de la voie de réception VR dans l'équipement EC. Réciproquement, des messages numériques relatifs à la signalisation téléphonique transmise initialement par le terminal TA, sont détectés par le processeur 1 dans le canal D de la voie d'émission VE via le circuit 11 dans l'équipement EC pour être retransmis sous forme de signaux analogiques de signalisation téléphonique dans la ligne analogique LAC vers le commutateur CM, sous la commande du processeur 1.

Du côté du central téléphonique CT, l'équipement de central EC comprend un détecteur de signal de sonnerie 2, un détecteur d'impulsion de taxe 3, un détecteur d'inversion de polarité 4, un détecteur de courant réduit 5 et un circuit de filtrage bidirectionnel à basse fréquence 6 connectés en parallèle sur la ligne analogique LAC à travers un circuit de protection 7. La ligne analogique LAC est terminée par un circuit à relais de prise de ligne 8 commandé par le processeur 1 afin de simuler dans la ligne analogique LAC une fermeture de boucle en réponse par exemple à un décrochage ou une ouverture de boucle en réponse par exemple à un raccrochage dans le terminal TA.

Le détecteur de signal de sonnerie 2 détecte tout type de signal de sonnerie cadencée quel que soit le type du commutateur téléphonique CM. Ainsi, le détecteur de sonnerie 2 comprend plusieurs filtres passe-bande ayant des bandes étroites centrées respectivement sur les différentes fréquences de sonnerie des commutateurs téléphoniques actuels, par exemple à 25 Hz, 30 Hz, 50 Hz, 60 Hz et 75 Hz. Le détecteur de sonnerie 2 signale tout début d'une impulsion de sonnerie modulant un courant sinusoïdal à la fréquence déterminée par le commutateur CM et toute fin d'impulsion de sonnerie, quelle que soit la longueur de l'impulsion qui peut être comprise entre 0,01 s et une sonnerie continue et par conséquent quelle que soit la longueur des intervalles de silence entre les impulsions de sonnerie qui peut être comprise entre 0,01 s et un silence continu.

Le détecteur d'impulsion de taxe 3 détecte toute impulsion de taxe transmise par le commutateur CM dans la ligne téléphonique LAC en dehors de la bande de fréquence à environ 4 kHz pour les signaux de parole. Le détecteur d'impulsion de taxe 3 est capable de détecter toute impulsion de taxe produite par les commutateurs téléphoniques actuels. A cet égard, le détecteur d'impulsion de taxe 3 comprend des filtres passe-bande ayant des bandes étroites centrées respectivement sur les fréquences de modulation des différentes impulsions de taxe, notamment égales à 12 kHz et 16 kHz.

Le détecteur d'inversion de polarité 4 détecte toute inversion de polarité entre les deux fils de la ligne analogique LAC. En effet, pour certains commutateurs, l'inversion de polarité sur une ligne analogique est utilisée pour signaler un changement d'état de la communication telle que par exemple une réponse du demandé.

Le détecteur de courant réduit 5 compare en permanence la grandeur du courant d'alimentation de la ligne analogique LAC imposé par la batterie d'alimentation dans le central CT à un seuil de courant prédéterminé. Ce seuil correspond à un courant très faible appliqué par le commutateur CM lorsque la ligne LA1 est en état de faux appel, et par suite la ligne LAC est également en état de faux appel. Ce faux appel résulte d'un décrochage dans le terminal TA prolongé au-delà d'une longue durée prédéterminée. L'équipement de central EC signale alors par un message de signalisation de courant réduit l'état de courant réduit à l'équipement EA pour qu'il l'applique dans la ligne LA1.

Chacun des détecteurs 2 à 5 échantillonne chaque signal qu'il surveille le plus rapidement possible, par exemple toutes les 10 ms, et ne valide les changements du signal auprès du processeur 1 qu'après confirmation par un ou deux échantillons supplémentaires pour éviter que la signalisation analogique restituée par l'équipement d'abonné ne respecte pas des gabarits imposés.

Le circuit de filtrage à basse fréquence 6 filtre bidirectionnellement les signaux dans la bande d'audiofréquence inférieure à 4 kHz, soit typiquement entre 300 Hz et 3400 kHz. Le circuit de filtrage est relié à un circuit de couplage, d'égalisation et de conversion 9. Ce dernier circuit comprend un coupleur deux fils/quatre fils de manière à découpler de la ligne analogique LAC à deux fils le canal B1 de la voie d'émission à deux fils VE et le canal B1 de la voie de réception à deux fils VR de la ligne numérique LN, et des égaliseurs pour les voies VR et VE, le cas échéant complétés par un annuleur d'écho. Le circuit 9 comporte également un convertisseur analogique-numérique à fréquence d'échantillonnage de 8 kHz pour convertir les signaux de parole mais également des signaux de signalisation déterminés, ou tout autre signal analogique transmis dans la bande audiofréquence de 4 kHz par le commutateur CM en des signaux numériques convoyés dans le canal B1 à 64 kbit/s de la voie de réception VR, après avoir transmis un signal de signalisation d'établissement à l'équipement d'abonné EA dans la ligne numérique LN, comme on le verra dans la suite. Un convertisseur numérique-analogique dans le circuit 9 convertit les signaux numériques du canal B1 reçus de la voie d'émission VE à travers la ligne numérique LN en des signaux analogiques de parole, ou notamment des signaux de numérotation à multifréquence, transmis dans la ligne analogique LAC vers le commutateur CM.

Dans l'équipement de central EC, un circuit de connexion bidirectionnel 10 commandé par le processeur 1 connecte à un circuit d'insertion et d'extraction de canal D 11 le circuit 9 attribué au canal B1 et le cas échéant un autre circuit 9 (non représenté) attribué au canal B2 et associé à un ensemble de détecteurs 2 à 5, circuit de filtrage 6, circuit de protection 7 et circuit à relais de prise de ligne 8, relié à l'extrémité d'une autre ligne analogique desservie par le commutateur CM. Le circuit de connexion 10 réunit octet par octet les deux canaux B1 et B2 à 64 kbit/s en les multiplexant à division du temps en un signal multiplex intermédiaire à 128 kbit/s selon le sens de la voie de réception VR. Réciproquement, le circuit de connexion 10 sépare les deux canaux B1 et B2 de la voie d'émission VE en les démultiplexant temporellement. Sous la commande du processeur 1, le circuit 11 insère des messages de signalisation NMDS dans le canal D à 16 kbit/s pour le multiplexer avec les deux canaux B1 et B2 dans la voie de réception VR, et inversement, extrait des messages de signalisation NMDS du canal D multiplexé avec les canaux B1 et B2 dans la voie d'émission VE.

L'équipement de central EC comprend également, entre le circuit d'insertion et d'extraction de canal D 11 et un deuxième circuit de protection 12 relié à la ligne numérique LN, une interface de codage/décodage 13 et un circuit de téléalimentation et de couplage deux fils/quatre fils 14 qui sont associés à un circuit de commande et de supervision 15. L'interface de codage/décodage 13 selon le sens de la voie de réception VR multiplexe les canaux B1, B2 et D avec d'autres canaux, notamment le canal de maintenance et de supervision CMS à 4 kbit/s, fournis par le circuit de commande et de supervision 15 en un signal multiplex à 80 kbauds codé selon le code 2B1Q. Réciproquement, l'interface 13 démultiplexe les deux groupes de canaux dans la voie d'émission VE pour fournir les canaux multiplexés B1, B2 et D au circuit 11 et le canal de maintenance et de supervision CMS à 4 kbit/s au circuit de commande et de supervision 15, après un décodage 1Q2B en code binaire.

Le circuit de téléalimentation 14 assure d'une manière classique la téléalimentation de la ligne numérique LN, les équipements EC et EA étant de préférence autonomes, et couple les voies d'émission VE et de réception VR chacune à deux fils avec la ligne numérique bidirectionnelle d'abonné à deux fils LN.

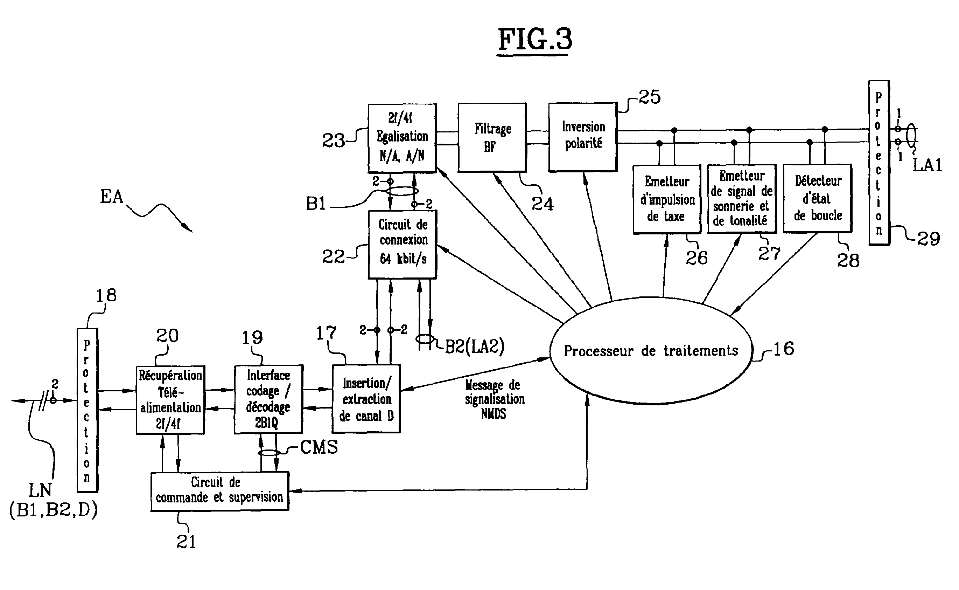

L'équipement d'abonné EA comporte, comme montré à la figure 3, de manière analogue à l'équipement de centre EC un processeur de traitements 16. Le processeur 16 analyse les messages numériques de signalisation téléphonique transmis par le commutateur CM via la voie de réception VR de l'équipement EA pour les retransmettre sous forme analogique dans la ligne analogique LTA vers le terminal TA. Dans la voie d'émission VE, le processeur 16 génère des messages numériques de signalisation téléphonique correspondant principalement à des décrochages et raccrochages et éventuellement à des impulsions de numération en code décimal établis dans le terminal TA. Le processeur 16 assure également l'activation permanente de la ligne numérique LN pour les couches 1 et 2 du modèle ISO dans le canal de signalisation D.

Du côté de la ligne LN, l'équipement d'abonné EA comporte un circuit d'insertion et d'extraction de canal de signalisation D 17, un circuit de protection 18, une interface de codage/décodage 19, un circuit de récupération de téléalimentation et de couplage deux fils/quatre fils 20 relié à la ligne numérique LN à travers le circuit de protection 18, et un circuit de commande et supervision 21 respectivement analogues aux circuits 11, 12, 13, 14 et 15 et agencés comme ceux-ci. Un circuit de connexion 22 est relié par un port de multiplexage/démultiplexage de canaux B au circuit d'insertion et d'extraction de canal D 17 et par un port de canal B1 à un circuit de conversion numérique-analogique et analogique-numérique et d'égalisation et de couplage deux fils/quatre fils 23 analogue au circuit 9. Le circuit de connexion 22 dessert également un deuxième port de canal B2. Le circuit 23 est relié à l'extrémité de la ligne analogique d'abonné LA1 à travers un circuit de filtrage à basse fréquence 24 ayant une bande d'audiofréquence inférieure à 4 kHz et un circuit d'inversion de polarité 25 correspondant aux circuits 6 et 4.

L'équipement d'abonné EA comporte également un émetteur d'impulsion de taxe 26 et un émetteur de signal de sonnerie et de tonalité 27 de manière à reproduire des impulsions de taxe et des impulsions de sonnerie cadencée dans la ligne LA1 en réponse à celles détectées par les détecteurs 2 et 3 dans l'équipement EC, et un détecteur d'état de boucle 28. Ce dernier détecteur 28 signale une fermeture de boucle ou une ouverture de boucle dans la ligne d'abonné LA1 en réponse à un décrochage ou un raccrochage dans le terminal TA, ou bien des couples d'ouverture de boucle et de fermeture de boucle dans la ligne LA1 correspondant à un chiffre de numérotation décimale, sous la forme de messages de signalisation respectifs dans le canal D de la voie d'émission VE dans l'équipement EA. Des ports du circuit d'inversion de polarité 25, des émetteurs 26 et 27 et du détecteur 28 sont reliés à une extrémité de la ligne analogique LA1 à travers un circuit de protection 29.

L'invention n'est pas limitée à l'exemple de liaison numérique LN décrite ci-dessus. En effet, comme on le verra dans la suite, les échanges de signaux entre les équipements EC et EA sont indépendants du support et de la technologie de transmission choisie. Par exemple, au lieu d'un codage 2B1Q, les signaux dans la ligne numérique à deux fils LN sont codés selon le code 4B3T, c'est-à-dire selon un codage de quatre bits en trois symboles ternaires ; le support physique de la ligne LN peut comprendre deux fibres optiques au lieu d'une paire symétrique de fils, ou bien encore au moins partiellement une liaison radio bidirectionnelle.

La signalisation numérique supportée par le canal D suivant chacun des sens de transmission de la ligne numérique LN est indépendante de la mise en oeuvre des communications téléphoniques et des services téléphoniques complémentaires fournis au terminal TA par le commutateur CM.

Selon la réalisation préférée décrite ci-après, la signalisation numérique est conforme au protocole de signalisation à stimulus selon le projet de norme EN 301 141-1, "Narrowband Multi-service Delivery System (NMDS)", ETSI, janvier 1998. Le protocole NMDS supporté par le canal D est utilisé dans la ligne numérique LN en même temps que des trames RNIS pour l'ensemble des canaux du multiplex à 160 kbit/s. La couche physique 1 et la couche de liaison de données 2 du modèle d'interconnexion ISO pour la ligne numérique sont activées en permanence entre les équipements EC et EA. L'activation permanente de la liaison numérique LN se traduit par l'introduction dans les champs d'adresse des messages de signalisation de la couche réseau 2 du modèle ISO échangés entre les équipements EC et EA, d'un identificateur de point d'accès au service SAPI (Service Access Point Identifer) et d'un identificateur de terminal TEI (Terminal Endpoint Identifer) ayant les états suivants :
- pour une communication analogique à travers les lignes LAC et LA1 relatives au premier canal B1 auquel on se référera dans la suite, les messages contiennent SAPI = 0 et TEI = 126 ;
- pour une communication à travers les autres lignes analogiques relatives au deuxième canal B2, les messages contiennent les identificateurs SAPI = 0 et TEI = 125.

Dans les messages de signalisation, un champ L3addr est à l'état "1" lorsque le canal B1 est sélectionné et est à l'état "2" lorsque le canal B2 est sélectionné, et est à l'état "0" lorsque le message n'est relatif à aucun des canaux B1 et B2.

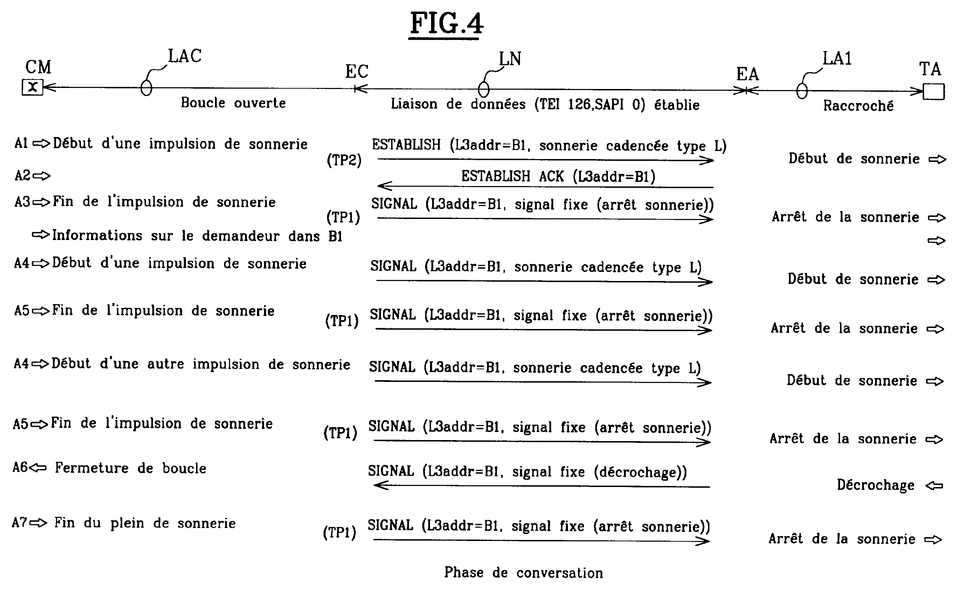

Dans les diagrammes de message dans les figures 4 à 7, les messages de signalisation dans le canal D sont décrits sous le format suivant :
NOM (L3addr=Bx, Signal(Info)) avec :
- "NOM" égal au nom du message utilisé, par exemple : SIGNAL, ESTABLISH, DISCONNECT, ...) ;
- "Bx" avec x égal au numéro 1 ou 2 du canal B utilisé, ou 0 si aucun canal n'est utilisé ;
- "Signal" est le nom de l'élément d'information utilisé dans le message "NOM", par exemple : signal fixe, sonnerie cadencée, signal impulsif,... ;
- "Info" est l'information spécifique, par exemple : arrêt sonnerie, polarité inversée, décrochage, raccrochage,...

Afin de ne pas surcharger les figures 4 à 7, un message d'acquittement de l'équipement EA ou EC ayant reçu un message de signalisation d'information SIGNAL n'est pas représenté. Les diagrammes dans ces figures sont relatifs à des échanges de signaux et messages concernant le canal B1 (TEI = 126) entre le terminal TA et le commutateur CM ; simultanément, des messages analogues peuvent être transmis à travers la ligne numérique LN relativement à une communication dans le deuxième canal B2.

Dans les figures 4 à 7, TP1 et TP2 indiquent respectivement des temporisations déclenchées dans l'équipement de central EC, typiquement de 10 secondes et 5 secondes.

La temporisation TP1 est par exemple déclenchée dans l'équipement de central après émission d'un message de signalisation d'information SIGNAL (addr, signal fixe (arrêt sonnerie)) afin que l'équipement de central attende la réception du début d'une autre impulsion de sonnerie cadencée, ou du signalement d'un décrochage dans le terminal TA. Si à l'expiration de la temporisation TP1, l'équipement EC n'a reçu aucun début d'une autre impulsion de sonnerie cadencée ou un décrochage dans le terminal TA et si la polarité de la ligne analogique LAC-LA1 est demeurée normale, l'équipement de central EC libère le canal réservé B1 par l'émission d'un message de signalisation de déconnexion DISCONNECT. Si la polarité dans la ligne analogique LAC est inversée à l'expiration de la temporisation TP1, l'équipement de central EC libère la réservation de canal en réponse à une remise en polarité normale de la ligne analogique LAC par le commutateur CM.

La temporisation TP2 est déclenchée après l'émission d'un message de signalisation d'établissement ESTABLISH par l'équipement de central EC dans l'attente de la réception du début d'une impulsion de sonnerie cadencée ou d'un décrochage dans le terminal TA. Si à l'expiration de la temporisation TP2, l'équipement EC n'a pas détecté le début d'une impulsion de sonnerie cadencée ou un décrochage, l'équipement EC libère la réservation du canal B1 par l'émission d'un message de signalisation de déconnexion DISCONNECT.

En référence à la figure 4, l'établissement d'un appel d'arrivée provenant d'un demandeur éloigné demandant d'établir une communication avec l'abonné demandé situé au niveau du terminal TA comprend essentiellement les étapes A1 à A6.

A l'étape A1, à la suite d'un message d'appel transmis par le commutateur rattaché au demandeur, le commutateur CM transmet une impulsion initiale de sonnerie cadencée dont le début est détecté par le détecteur 2 afin que le circuit 11 sous la commande du processeur 1 dans l'équipement de central EC insère un message d'établissement ESTABLISH avec un champ d'information indiquant une sonnerie cadencée de type L, dans le canal D de la voie de réception VR. Selon l'invention, le type L de sonnerie cadencée est connu par les deux équipements d'extrémité EC et EA et correspond à des trains de sonnerie dont les impulsions sont les plus longues parmi toutes les impulsions de sonnerie susceptibles d'être produites par les commutateurs téléphoniques connus ; par exemple, la durée d'une impulsion de type L est supérieure à 10 s. Le message ESTABLISH ainsi inséré dans le canal D par le circuit 11 de l'équipement EC est transmis à travers la ligne numérique LN pour être détecté par le circuit d'insertion et d'extraction 17 dans l'équipement d'abonné EA. Le processeur 16 commande alors l'émetteur 27 pour commencer à transmettre une impulsion de la plus grande longueur de type L dans la ligne analogique LA1 vers le terminal d'abonné TA. En réponse au message ESTABLISH, l'équipement EA retourne à l'étape A2 un message d'accusé de réception d'établissement ESTABLISH ACK dans le canal D de la voie d'émission VE de la ligne numérique vers l'équipement EC dont le processeur 1 attend la fin de l'impulsion initiale de sonnerie. Lorsque le détecteur 2 détecte la fin de l'impulsion initiale de sonnerie à l'étape A3, le processeur 1 introduit à travers le circuit 11 un message de signalisation d'information SIGNAL comportant un champ d'information d'arrêt de sonnerie qui est transmis dans le canal D de la voie de réception VR vers l'équipement EA. Le processeur 16 dans l'équipement EA arrête le signal de sonnerie dans l'émetteur 26 en réponse au message reçu SIGNAL, ce qui arrête la sonnerie d'appel dans le terminal TA.

Bien que l'équipement EC n'émette pas un message avec une information sur les durées précises des impulsions et silences de sonnerie produits par le commutateur téléphonique CM et bien que l'équipement EA ignore ces durées, l'équipement d'abonné EA reproduit toujours dans la ligne analogique d'abonné LA1 l'impulsion de sonnerie initialement transmise dans la ligne analogique LAC quelle que soit sa longueur et donc quel que soit le cadencement de la sonnerie dont les longueurs d'impulsion et de silence peuvent être inférieures à L = 10 s. Par exemple, une impulsion de 1,5 s suivie d'un silence de 1,5 s ou 3,5 s, ou une impulsion de 0,7 s suivie d'un silence de 0,7 s ou de 3,2 s transmises dans la ligne LAC sont reproduites dans la ligne LA1.

Puis tant que l'abonné du terminal TA n'a pas effectué un décrochage, des impulsions de sonnerie cadencée sont transmises du commutateur CM vers le terminal TA à travers la liaison numérique LM selon des couples d'étapes A4 et A5 dont deux sont représentés à titre d'exemple dans la figure 4. L'étape A4 concerne une détection d'un début d'une impulsion de sonnerie par le détecteur 2 dans l'équipement EC dont le processeur 1 commande l'émission d'un message de signalisation d'information SIGNAL avec un champ d'information signalant le type L de la sonnerie cadencée pour le transmettre dans la voie de réception VR vers l'équipement EA dont le processeur 16, à la réception de ce message SIGNAL, déclenche dans l'émetteur 27 le début d'une impulsion de sonnerie cadencée émise vers le terminal TA. A l'étape A5, la fin de l'impulsion de sonnerie détectée par le détecteur 2 dans l'équipement EC, comme à l'étape A3, déclenche la transmission d'un message SIGNAL avec un champ d'information d'arrêt de sonnerie vers l'équipement d'abonné EA afin que l'émetteur 26 arrête la sonnerie.

Si un décrochage de l'abonné dans le terminal TA est effectué, par fermeture de la boucle d'abonné dans la ligne LA1, et donc production d'un courant continu dans cette ligne, le détecteur d'état de boucle 28 dans l'équipement d'abonné EA détecte ce décrochage et le processeur 16 arrête la sonnerie dans le terminal TA en agissant sur l'émetteur 27 et produit un message de signalisation d'information SIGNAL contenant une information de décrochage qui est transmis dans le canal D de la voie d'émission VE à travers la ligne numérique LN, à l'étape A6. Ce message SIGNAL extrait par le circuit 11 dans l'équipement de central EC est traité par le processeur 1 qui commande une fermeture de boucle de la ligne analogique LAC par l'intermédiaire du circuit à relais de prise de ligne 8. La phase de conversation entre les deux abonnés commence par l'échange de signaux de parole à travers les canaux B1 des voies VR et VE. Toutefois, si le décrochage dans le terminal TA intervient pendant la transmission d'une impulsion de sonnerie, c'est-à-dire entre une étape A4 et une étape A5, la fermeture de la boucle de la ligne LAC détectée par le commutateur CM provoque l'arrêt de l'impulsion de sonnerie en cours à une étape A7, ce qui se traduit par l'émission d'un message SIGNAL avec un champ d'information contenant un arrêt de sonnerie par l'équipement EC vers l'équipement EA.

Lorsque des signaux d'information analogiques sur l'identité du demandeur, telle que le numéro d'appel de celui-ci, sont transmis par le commutateur CM après la fin de l'impulsion initiale entre les étapes A3 et A4, ces signaux d'information traversent les circuits 6, 9, 10, 11, 13 et 14 dans l'équipement de central EC qui les convertit en signaux numériques dans le canal B1 de la voie de réception VR vers la ligne numérique LN. Les signaux d'information numériques sur le demandeur traversant les circuits 20, 19, 17 et 22 sont reproduits par le circuit de conversion 23 de l'équipement EA sous forme analogique dans la ligne LA1, et le terminal TA affiche l'information sur le demandeur.

Les signaux d'information analogiques peuvent être précédés d'une tonalité et sont composés de signaux numériques modulant des bifréquences prédéterminées comprises dans la bande audio afin que la liaison EC-LN-EA soit complètement transparente à ces signaux ; de préférence, ces signaux sont analogues aux signaux d'identification normalisés échangés entre deux modems.

Dans ce cas, à l'étape A1, à la place d'une impulsion initiale de sonnerie, l'équipement de central EC détecte une tonalité d'appel dans la ligne LAC et transmet un message d'établissement ESTABLISH (L3addr = B1) dans le canal D de la voie de réception VR et attend un message d'accusé de réception d'établissement ESTABLISH ACK (L3addr = B1) émis dans le canal D de la voie d'émission VE par l'équipement d'abonné EA, pendant une temporisation TP2.

Selon une autre variante relative à un appel d'arrivée avec inversion de polarité, les étapes A1 à A3 sont remplacées par :
- une inversion de polarité effectuée par le commutateur CM en réponse à l'appel du demandeur éloigné et détectée par le détecteur 4 dans l'équipement EC, cette détection d'inversion de polarité provoquant à travers le processeur 1 et le circuit 11, l'émission d'un message d'établissement ESTABLISH (L3addr = B1) dans la voie de réception VR;
- puis en réponse à ce message, la transmission d'un message d'accusé de réception ESTABLISH ACK (L3addr = B1) dans la voie d'émission VE dans l'équipement d'abonné EA, et
- à la suite du message d'accusé réception, la transmission d'un message de signalisation SIGNAL (L3addr = B1, signal fixe (polarité inversée)) par l'équipement EC vers l'équipement EA dans lequel le circuit d'inversion de polarité 25 inverse la polarité entre les fils de la ligne LA1.

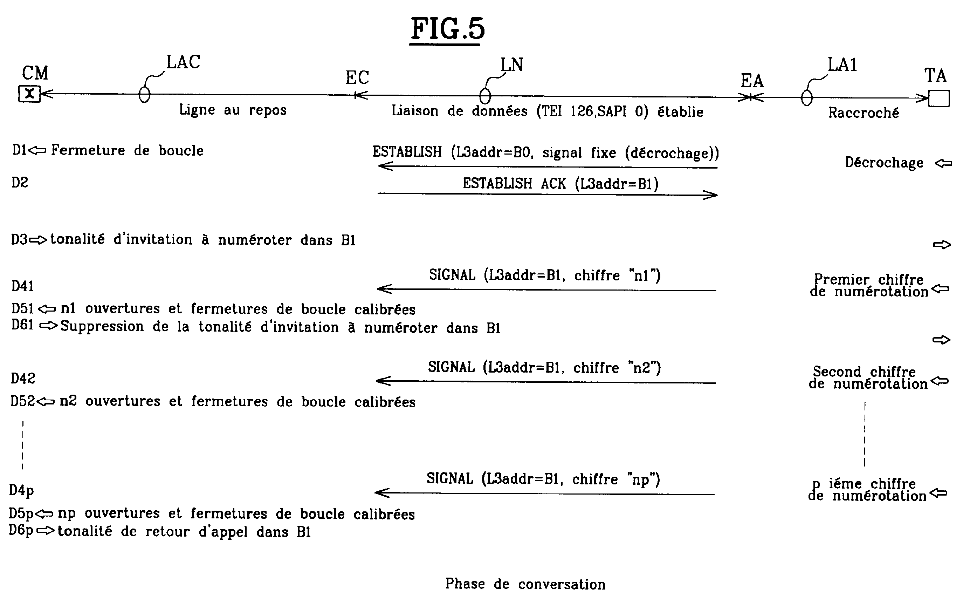

L'établissement d'un appel de départ déclenché par un décrochage dans le terminal TA afin de communiquer avec un abonné demandé éloigné, est illustré à la figure 5 lorsque la numérotation du numéro d'appel de l'abonné demandé est signalée par des impulsions de numérotation décimale. Cet établissement d'appel de départ comprend essentiellement des étapes D1 à D7.

A la première étape D1, la fermeture de boucle dans la ligne analogique d'abonné LA1 causée par le décrochage dans le terminal TA est détectée par le détecteur d'état de boucle 28 dans l'équipement EA dont le processeur 16 produit un message de signalisation d'établissement ESTABLISH (L3addr = B0, Signal Fixe (décrochage)) qui est transmis par le circuit 17 dans le canal D de la voie d'émission VE. Ce message d'établissement est prélevé du canal D par le circuit 11 dans l'équipement EC. Après analyse du message, le processeur 1 commande le circuit à relais de prise de ligne 8 pour générer une fermeture de boucle dans la ligne LAC. Le processeur 1 de l'équipement de central EC accuse réception du message d'établissement en émettant un message d'accusé de réception ESTABLISH ACK (L3addr = B1) vers l'équipement d'abonné EA à l'étape D2. A la suite de la fermeture de boucle dans la ligne analogique LAC, le commutateur CM émet une tonalité d'invitation à numéroter qui est convertie numériquement et transmise à travers le circuit 9 dans le canal B1 de la voie de réception VR vers la ligne numérique LN. Cette tonalité d'invitation à numéroter est reproduite dans la ligne LA1 par l'émetteur 27 de l'équipement d'abonné EA. L'abonné demandeur commence alors à composer le numéro d'appel de l'abonné demandé sur le cadran ou le clavier du terminal TA.

Pour une numérotation décimale, à chaque chiffre de numérotation correspond un nombre respectif d'ouvertures et de fermetures de boucles calibrées dans la ligne LA1 ; par exemple, pour le chiffre "0", dix couples d'ouverture de boucle et de fermeture de boucle calibrées dans la ligne LA1 sont effectués par le terminal TA, et de manière générale pour le chiffre "n" avec 1 ≤ n ≤ 9, "n" couples d'ouverture de boucle et de fermeture de boucle calibrées sont effectués dans la ligne LA1.

Au début de la composition du numéro d'appel du demandé, le premier chiffre de numérotation nl est validé par le processeur 16 dans l'équipement d'abonné EA en comptant les couples d'ouverture et de fermeture détectés dans la ligne LA1 par le détecteur 28. Puis un message de signalisation d'information SIGNAL (L3addr = Bl, Chiffre "nl") est transmis par le processeur 16 à travers le circuit 17 dans le canal D de la voie d'émission VE. Après extraction de ce message SIGNAL par le circuit 11, le processeur 1 dans l'équipement de central EC commande autant de couples d'ouverture de boucle et de fermeture de boucle dans la ligne LAC que le premier chiffre "n1" par l'intermédiaire du circuit à relais de prise de ligne 8, à des étapes D41 et D51. En réponse aux premières ouverture de boucle et fermeture de boucle de numérotation, le commutateur CM supprime la tonalité d'invitation à numéroter dans la ligne LAC à l'étape D61. Un autre message de signalisation d'information SIGNAL (L3addr = B1, Chiffre "n2") est transmis à l'étape D42 par l'équipement EA à l'équipement EC en réponse à la succession de couples d'ouverture de boucle et fermeture de boucle calibrées dans la ligne LA1 produit par le terminal TA et correspondant au deuxième chiffre composé du numéro d'appel du demandeur, ce qui se traduit au niveau de l'équipement de central EC par une succession de couples d'ouverture de boucle et de fermeture de boucle calibrées dans la ligne LAC à l'étape D52. Des étapes analogues aux étapes D41 et D51 ou D42 et D52 sont répétées pour chaque chiffre du numéro d'appel de l'abonné demandé composé dans le terminal TA jusqu'à des étapes D4p-D5p correspondant aux pième et dernier chiffre du numéro d'appel de l'abonné demandé.

Après les étapes de numérotation D41 à D5p, le commutateur CM accuse réception du numéro d'appel de demandé en émettant un signal de tonalité de retour d'appel dans la ligne LAC qui est transmis à travers le circuit 9 de l'équipement EC sous forme numérique dans le canal B1 de la voie de réception VR et qui est reproduit analogiquement par le circuit 23 de l'équipement EA dans la ligne LA1 à destination du terminal TA. Puis des signaux de conversation peuvent être échangés entre le terminal TA et le terminal de l'abonné demandé.

Lorsque la numérotation pour l'établissement d'un appel de départ est effectuée par l'intermédiaire de chiffres en code à multifréquence DTMF (Dual-Tone MultiFrequency), chaque couple d'étapes D41-D51 à D4p-D5p est remplacé par la transmission d'un signal bifréquence émis par le générateur à multifréquences du terminal TA dans la ligne LA1, converti sous forme numérique par le circuit 23 de l'équipement d'abonné EA et transmis dans le canal B1 de la voie d'émission VE, puis converti sous forme analogique par le circuit 9 de l'équipement de central EC et transmis dans la ligne LAC vers le commutateur CM.

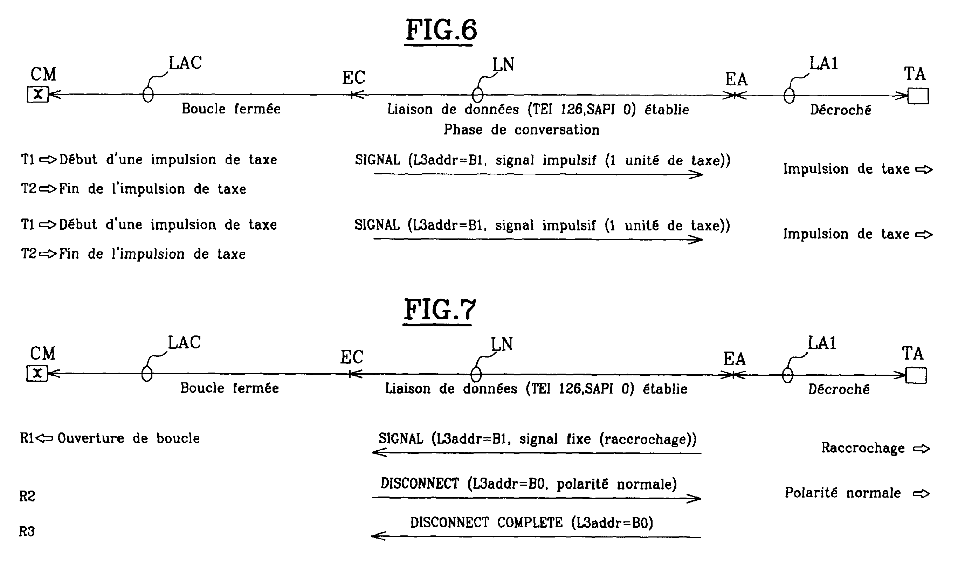

Comme montré à la figure 6, lorsque des impulsions de taxe sont à transmettre au terminal TA pendant la phase de conversation, deux étapes successives T1 et T2 sont effectuées pour chaque impulsion de taxe.

A l'étape T1, le commutateur téléphonique CM transmet une impulsion de taxe calibrée dans la ligne LAC dont le début est détecté par le détecteur 3 dans l'équipement de central EC. Sous la commande du processeur 1, le circuit 11 insère un message de signalisation d'information SIGNAL (L3addr = B1, signal impulsif (une unité de taxe)) dans le canal D de la voie de réception VR de la ligne numérique LN. Ce dernier message d'information SIGNAL est prélevé par le circuit 17 de l'équipement EA, et le processeur 16 commande l'émetteur 26 pour qu'il émette l'impulsion de taxe dans la ligne LA1 afin qu'un compteur de taxe dans le terminal TA soit incrémenté d'une unité de taxe en réponse à l'impulsion de taxe. La durée de l'impulsion de taxe dans la ligne analogique LA1 est fixée par l'équipement d'abonné EC, et est indépendante de la durée de l'impulsion de taxe dans la ligne LAC. Par conséquent la détection de la fin de l'impulsion de taxe à l'étape T2 par le détecteur 3 dans l'équipement de central EC ne génère aucun message d'information SIGNAL. Toutefois en variante, et de manière analogue à l'étape A5, l'équipement de central EC produit un message de signalisation d'information SIGNAL contenant un champ d'information d'arrêt d'impulsion de taxe à l'étape T2, afin que l'équipement EA reproduise exactement la longueur de l'impulsion de taxe dans la ligne LA1.

En référence à la figure 7, la libération d'une communication en phase de conversation, pour une communication sans taxe ni inversion de polarité, comprend essentiellement les trois étapes suivantes R1, R2 et R3.

A la suite d'un raccrochage dans le terminal TA qui supprime le courant continu dans la ligne d'abonné LA1 et par conséquent provoque une ouverture de boucle qui est détectée par le détecteur d'état de boucle 28 dans l'équipement d'abonné EA, le processeur 16 introduit à travers le circuit 17 un message de signalisation d'information SIGNAL (L3addr = B1, Signal Fixe (raccrochage)) dans le canal D de la voie d'émission VE à l'étape R1. Ce message est extrait par le circuit 11 dans l'équipement de central EC et est analysé par le processeur 1 qui commande une ouverture de boucle dans la ligne LAC par l'intermédiaire du circuit à relais de prise de ligne 8. Le commutateur CM signale ce raccrochage de l'abonné local au commutateur de rattachement de l'autre abonné distant afin que ce dernier reçoive une tonalité d'invitation à raccrocher. L'équipement de central EC retourne dans la voie d'émission VE un message de déconnexion DISCONNECT (L3addr = B0, polarité normale) pour que le circuit 25 de l'équipement d'abonné EA impose, le cas échéant, la polarité normale dans la ligne analogique LA1. Le processeur 16 de l'équipement EA termine la phase de libération en émettant un message de fin de libération DISCONNECT COMPLETE (L3addr = B0) vers l'équipement de central EC à travers le canal D de la voie d'émission VE, à l'étape R3.

Si à l'étape R1, l'ouverture de la boucle dans la ligne LAC est produite lors d'une impulsion de sonnerie cadencée entre les étapes A4 et A5, le commutateur téléphonique CM arrête immédiatement cette impulsion de sonnerie. La libération de la liaison entre le commutateur CM et le terminal TA se déroule ensuite suivant les étapes R2 et R3 décrites précédemment.

De même si l'ouverture de la boucle dans la ligne LAC est produite lors d'une impulsion de taxe entre les étapes T1 et T2, le commutateur CM attend la fin de la génération de l'impulsion (étape T2) avant de libérer la liaison suivant les étapes R2 et R3.

De même, le retour à une polarité normale dans la ligne LAC ayant une polarité inversée pendant une phase de conversation est commandé par le commutateur CM à la suite de l'ouverture de boucle à l'étape R1 et est suivi par les étapes R2 et R3.

Lorsque la rupture de la communication est effectuée par l'abonné distant, le commutateur CM signale cette libération par l'émission d'une tonalité d'invitation à raccrocher dans la ligne LAC qui est convertie numériquement dans le circuit 9 de l'équipement de central EC et est transmise dans le canal B1 de la voie de réception VR vers la ligne numérique LN et qui est convertie analogiquement dans le circuit 23 de l'équipement d'abonné EA et transmise au terminal TA à travers la ligne analogique LA1. Puis à la suite du raccrochage local effectué dans le terminal TA, les étapes R1 à R3 sont réalisées.

Pour certains services, une inversion de polarité suivie d'un retour à la polarité normale dans la ligne LAC sous la commande du commutateur CM provoque successivement la transmission d'un message de signalisation d'information SIGNAL (L3addr = B1, signal fixe (polarité inversée)) et d'un message de signalisation d'information SIGNAL LA3 (L3addr = B1, signal fixe (polarité normale)) dans le canal D de la voie de réception VR afin que le circuit 25 de l'équipement EA reproduise une polarité inversée puis une polarité normale dans la ligne analogique LA1.

D'autres messages que ceux qui ont été précisés ci-dessous peuvent être échangés entre les équipements EC et EA en fonction notamment de certains services offerts au terminal TA. Par exemple, un message de signalisation SIGNAL contenant une information de rappel d'un enregistreur dans le commutateur CM est transmis par l'équipement EA vers l'équipement EC à la suite d'un raccrochage calibré ("flash") dans le terminal TA. D'autres combinaisons de messages SIGNAL (raccrochage), DISCONNECT, DISCONNECT COMPLETE, ESTABLISH (sonnerie cadencée de type L), ESTABLISH ACK, SIGNAL (arrêt sonnerie) et SIGNAL (décrochage) sont échangées entre les équipements EC et EA pour un traitement d'appels en garde ou en instance avec polarité normale ou polarité inversée.

## Revendications

1. Système de raccordement entre un terminal téléphonique analogique (TA) et un commutateur téléphonique analogique (CM), comprenant un premier équipement (EA) pour convertir des premiers signaux analogiques transmis par le terminal dans une première ligne analogique bidirectionnelle (LA1) en des premiers signaux numériques (VE) transmis dans une liaison bidirectionnelle (LN) et pour convertir des deuxièmes signaux numériques (VR) de la liaison en des deuxièmes signaux analogiques transmis dans la première ligne analogique vers le terminal, et un deuxième équipement (EC) pour convertir les premiers signaux numériques (VE) en des troisièmes signaux analogiques transmis dans une deuxième ligne analogique bidirectionnelle (LAC) vers le commutateur (CM) et pour convertir des quatrièmes signaux analogiques transmis par le commutateur (CM) dans la deuxième ligne analogique (LAC) en les deuxièmes signaux numériques (VR) dans la liaison (LN), caractérisé en ce que le deuxième équipement (EC) comprend un moyen (2) pour détecter des impulsions modulant un courant alternatif de fréquence prédéterminée produites dans la deuxième ligne analogique (LAC) par le commutateur (CM), et un moyen (1, 11) pour générer des premier et deuxième messages numériques de signalisation (A4, A5) dans la liaison numérique (LN) vers le premier équipement (EA) respectivement en réponse au début et à la fin de chaque impulsion détectée, et le premier équipement (EA) comprend un moyen (17, 16) pour extraire et analyser les premier et deuxième messages de signalisation (A4, A5) dans la liaison et un moyen (16, 27) pour commencer à émettre une impulsion modulant un courant alternatif dans la première ligne analogique (LA1) vers le terminal (TA) en réponse au premier message de signalisation (A4) et pour terminer l'impulsion en réponse au deuxième message de signalisation (A5).

2. Système conforme à la revendication 1, dans lequel les impulsions modulant un courant alternatif de fréquence prédéterminée produites par le commutateur (CM) sont des impulsions d'un signal de sonnerie cadencée, et le premier message de signalisation (A4) contient dans un champ d'information la plus grande durée (L) des impulsions de signaux de sonnerie cadencée qu'est susceptible de produire le commutateur (CM) afin que la réception d'un deuxième message de signalisation (A5) dans le premier équipement (EA) limite la longueur de l'impulsion transmise au terminal (TA) qui a débutée en réponse au premier message de signalisation (A4).

3. Système conforme à la revendication 1 ou 2, dans lequel le premier message de signalisation (A1) est un signal d'établissement d'appel d'arrivée en réponse au début d'une première impulsion transmise par le commutateur (CM) à la suite d'un appel d'arrivée du terminal (TA) et détectée dans le deuxième équipement (EC).

4. Système conforme à l'une quelconque des revendications 1 à 3, dans lequel le deuxième équipement (EC) comprend un moyen (4) pour détecter une inversion de polarité dans la deuxième ligne analogique (LAC) à la suite d'un appel d'arrivée du terminal dans le commutateur (CM), et un moyen (1, 11) pour générer un message numérique de signalisation d'établissement puis un message numérique de signalisation de polarité inversée dans la liaison (LN) vers le premier équipement (EA), et le premier équipement (EA) comprend un moyen (17, 16) pour extraire et analyser le message de signalisation d'établissement et le message de signalisation de polarité inversée et un moyen (16, 25) pour inverser la polarité dans la première ligne analogique (LA1) en réponse au message de polarité inversée, un signal de tonalité transmis dans la deuxième ligne analogique (LAC) par le commutateur (CM) succédant à l'inversion de polarité étant converti en un deuxième signal numérique (VR) dans le deuxième équipement (EC) puis dans le premier équipement (EA) en un signal de tonalité transmis dans la première ligne analogique (LA1) vers le terminal (TA).

5. Système conforme à l'une quelconque des revendications 1 à 4, dans lequel le deuxième équipement (EC) comprend un moyen (2) pour détecter un signal de tonalité d'appel transmis dans la deuxième ligne analogique (LAC) par le commutateur (CM), et un moyen (1, 11) pour générer un message numérique d'établissement dans la liaison numérique (LN) vers le premier équipement (EA), le signal de tonalité d'appel étant converti en un deuxième signal numérique dans le deuxième équipement (EC), puis en un deuxième signal analogique dans le premier équipement (EA).

6. Système conforme à l'une quelconque des revendications 1 à 5, dans lequel le premier équipement (EA) comprend un moyen (28, 16) pour détecter une fermeture de boucle dans la première ligne analogique (LA1) à la suite d'un décrochage dans le terminal (TA), et un moyen (16, 17) pour générer un message numérique de signalisation d'établissement (D1) dans la liaison (LN) en réponse à la fermeture de boucle détectée, et le deuxième équipement (EC) comprend un moyen (1, 11) pour détecter le message de signalisation d'établissement (D1) dans la liaison (LN) et un moyen (1, 8) pour générer une fermeture de boucle dans la deuxième ligne analogique (LAC) en réponse au message d'établissement détecté, un signal de tonalité d'invitation à numéroter (D3) produit par le commutateur (CM) en réponse à la fermeture de boucle étant converti en un deuxième signal numérique (VR) dans le deuxième équipement (EC), puis dans le premier équipement (EA) en un signal de tonalité d'invitation à numéroter transmis dans la première ligne analogique (LA1) vers le terminal (TA).

7. Système conforme à l'une quelconque des revendications 1 à 6, dans lequel le premier équipement (EA) comprend un moyen (28, 16) pour détecter des couples d'ouverture de boucle et fermeture de boucle calibrées dans la première ligne analogique (LA1) à la suite d'un chiffre de numéro d'appel composé dans le terminal (TA) et un moyen (16, 17) pour générer un message numérique de signalisation de chiffre (D4p) contenant un nombre desdits couples détectés (np) dans la liaison (LN), et le deuxième équipement (EC) comprend un moyen (1, 11) pour détecter le message de signalisation de chiffre (D41) dans la liaison (LN), et un moyen (1, 8) pour générer le nombre de couples d'ouverture de boucle et de fermeture de boucle calibrées (D5p) dans la deuxième ligne analogique (LAC) en réponse à la lecture dans le message de signalisation de chiffre.

8. Système conforme à l'une quelconque des revendications 1 à 7, dans lequel les quatrièmes signaux analogiques qui sont convertis en des deuxièmes signaux numériques dans le deuxième équipement (EC) puis en des premiers signaux analogiques dans le premier équipement (EA), sont des signaux de parole transmis par le commutateur (CM) pendant une phase de conversation d'une communication et notamment des signaux d'identification de demandeur, des signaux de tonalité d'appel, des signaux de tonalité d'invitation à numéroter, des signaux de suppression de tonalité d'invitation à numéroter et des signaux de tonalité de retour d'appel, et en ce que les premiers signaux analogiques convertis en des premiers signaux numériques dans le premier équipement (EA), puis convertis en des troisièmes signaux analogiques dans le deuxième équipement (EC) sont des signaux de parole transmis par le terminal (TA) pendant une phase de conversation d'une communication et notamment des signaux de numérotation à multifréquence de chiffres d'un numéro d'appel composé dans le terminal (TA).

9. Système conforme à l'une quelconque des revendications 1 à 8, dans lequel le deuxième équipement (EC) comprend un moyen (3) pour détecter une impulsion de taxe produite dans la deuxième ligne analogique (LAC) par le commutateur (CM) et un moyen (1, 11) pour générer un message numérique de signalisation de taxe (T1) dans la liaison numérique (LN) vers le premier équipement (EA) en réponse à l'impulsion de taxe détectée, et le premier équipement (EA) comprend un moyen (17, 16) pour extraire et analyser le message de signalisation de taxe et un moyen (16, 26) pour émettre une impulsion de taxe dans la première ligne analogique (LA1) vers le terminal (TA) en réponse au message de signalisation de taxe.

10. Système conforme à l'une quelconque des revendications 1 à 9, dans lequel le premier équipement (EA) comprend un moyen (28, 16) pour détecter une ouverture de boucle dans la première ligne analogique (LA1) à la suite d'un raccrochage dans le terminal (TA) et un moyen (16, 17) pour générer un message numérique de signalisation de raccrochage (R1) dans la liaison (LN) en réponse à l'ouverture de boucle, et le deuxième équipement (EC) comprend un moyen (1, 11) pour détecter le message de signalisation de raccrochage (R1) dans la liaison (LN) et un moyen (1, 8) pour générer une ouverture de boucle dans la deuxième ligne analogique (LAC) en réponse au message de signalisation de raccrochage détecté, et un moyen (1, 11) pour générer un message numérique de signalisation de déconnexion (R2) comportant une information de polarité normale dans la liaison (LN) vers le premier équipement (EA) en réponse au message de signalisation de raccrochage détecté.
